(19) Europäisches Patentamt
European Patent Office
Office européen des brevets

(11) Veröffentlichungsnummer: **0 417 595 A1**

## (12) EUROPÄISCHE PATENTANMELDUNG

(21) Anmeldenummer: 90116895.5

(22) Anmeldetag: 03.09.90

(51) Int. Cl.⁵: **B23K 35/38, B23K 10/02**

(30) Priorität: 13.09.89 DE 3930646

(43) Veröffentlichungstag der Anmeldung:
20.03.91 Patentblatt 91/12

(84) Benannte Vertragsstaaten:
AT BE CH DE ES FR GB GR IT LI NL SE

(71) Anmelder: **Linde Aktiengesellschaft**
**Abraham-Lincoln-Strasse 21**
**W-6200 Wiesbaden(DE)**

(72) Erfinder: **Hohenberger, Hans**
**Zaunweg 10**
**W-8000 München 40(DE)**
Erfinder: **Böhme, Dieter, Dr.Ing.**
**Gistlstrasse 47**
**W-8023 Pullach(DE)**

(74) Vertreter: **Schaefer, Gerhard, Dr.**
**Linde Aktiengesellschaft Zentrale**
**Patentabteilung**
**W-8023 Höllriegelskreuth(DE)**

(54) Verfahren zum Verschweissen von beschichteten, insbesondere verzinkten Dünnblechen.

(57) Es handelt sich um ein Verfahren zum Verschweißen von beschichteten, insbesondere verzinkten Dünnblechen. Die Durchführung der Verschweißung mit dem Plasma-Lichtbogen-Schweißverfahren, wobei neben Argon als Zentrumsgas ein Argon-Sauerstoff-Gemisch mit 87 bis 97 Vol% Argon und 3 bis 13 Vol% Sauerstoff als Außen- oder Schutzgas, eingesetzt wird, liefert überraschend ein sehr gutes Schweißergebnis, womit dieses Verfahren eine Alternative zu den bekannten MAG-Schmelzschweißverfahren darstellt.

EP 0 417 595 A1

# VERFAHREN ZUM VERSCHWEISSEN VON BESCHICHTETEN, INSBESONDERE VERZINKTEN, DÜNNBLECHEN

Die Erfindung betrifft ein Verfahren zum Verschweißen von beschichteten, insbesondere verzinkten, Dünnblechen.

Zum Verschweißen von beschichteten Dünnblechen (Blechdicken um 1 mm) beispielsweise im Automobilbau findet bisher vor allem das Widerstandspunktschweißen Anwendung. Diese Schweißmethode hat neben unbestreitbaren Vorteilen vor allem in fertigungstechnischer Hinsicht auch Nachteile, z.B. vergleichsweise hohe Investitionskosten und Defizite im Hinblick auf die mechanische Stabilität der mit ihr gefertigten Bausteile (die Kraftübertragung zwischen punktgeschweißten Bauteilen erfolgt eben auch punktweise!).

Deshalb werden auch andere Schweißverfahren, insbesondere Schmelzschweißverfahren, zum Verbinden dünner Bleche angewandt, die aufgrund von durchgehend ausführbaren Schweißverbindungen eine höhere mechanische Stabilität liefern können. Bekannt ist hierbei vor allem die Anwendung des MAG-Schweißens mit abschmelzender Elektrode. Als Zusatzwerkstoffe werden dabei unlegierte Drahtelektroden nach DIN 8559 oder Bronzedrahtelektroden eingesetzt. Bei der Durchführung dieses verfahrens tritt jedoch insbesondere bei den Drahtelektroden häufig eine starke Spritzerbildung auf, die zu nicht mehr akzeptablen Bauteilen oder zu kostenintensiven Nacharbeiten führen kann. Darüber hinaus kommt es insbesondere bei dünneren Blechen des öfteren zu Baddurchbrüchen beim Schweißvorgang, da etwa senkrecht zu den Blechen in den aus dem überstehendem Unterblech und dem darauf liegendem Oberblech gebildeten Winkel geschweißt wird. Die zweitgenannte Variante mit bronzenem Elektrodendraht stellt dagegen aus Kostengründen eine nur in Sonderfällen anwendbare Möglichkeit dar.

Die Aufgabenstellung im Hinblick auf die vorliegende Erfindung bestand daher darin, ein günstiges Schmelzschweißverfahren zum Verbinden von beschichteten Dünnblechen anzugeben, welches insbesondere auch die Nachteile der bereits bekannten Verfahren überwindet.

Diese Aufgabenstellung wird dadurch gelöst, daß die Verschweißung mit dem Plasma-Lichtbogen-Schweißverfahren entlang der vorgesehenen Schweißfuge durchgeführt wird, wobei neben Argon als Zentrumsgas ein Argon-Sauerstoff-Gemisch mit 87 bis 97 Vol-% Argon und 3 bis 13 Vol-% Sauerstoff als Außen- oder Schutzgas eingesetzt wird.

Diese Schweißmethode liefert beim Verschweißen von beschichteten Dünnblechen ein nicht zu erwartendes, sehr gutes Schweißergebnis, ist aber aus den bekannten Schweißverfahren nicht ohne weiteres ableitbar. Dies gilt deshalb, da Gasgemische entsprechend dem erfindungsgemäßen in der Schweißtechnik zwar allgemein bekannt sind und angewendet werden, z.B. beim MAG-Schweißen, die Anwendung des genannten Gasgemisches jedoch bei der Plasma-Schweiß-Methode noch nicht vorgeschlagen wurde. Beim Plasmaschweißen sind als Außengase bisher nur Mischungen von Argon mit Wasserstoff, Helium oder Stickstoff bekannt, und darüber hinaus ist Sauerstoff als Außengasanteil wegen der Oxidationsgefahr für die Elektrode sogar eher als ungünstig einzustufen. Bei versuchen hat sich diesbezüglich zudem gezeigt, daß das Plasmaschweißverfahren mit konventionellen Außengasen keine guten Schweißergebnisse liefert, überraschenderweise jedoch mit der sauerstoffhaltigen Außengasmischung qualitativ hochwertige Schweißnähte in einem stabilen Schweißprozeß erzielt werden.

Mit dem erfindungsgemäßen Verfahren, also der Anwendung des Plasma-Lichtbogen-Schweißverfahrens mit der genannten Gasmischung in der beschriebenen Weise, ergibt sich also entgegen den Erwartungen ein sehr gutes Schweißergebnis mit sicher aufgeschweißten, regelmäßigen, glatten und korrossionsstabilen Schweißnähten, die in einem stabilen Schweißvorgang praktisch ohne Schweißspritzer entstehen.

Eine besonders vorteilhafte Variante des erfindungsgemäßen Verfahrens besteht in der Anwendung des Plasma-Lichtbogen-Schweißverfahrens mit pulsförmigem Stromverlauf, dem sog. Plasma-Impuls-Lichtbogenschweißen, das bezüglich des Wärmeeintrags in die zu verschweißenden Werkstücke besonders fein regulierbar ist. Diese Verfahrensvariante ist deshalb besonders für die Verschweißung von Dünnblechen, insbesondere Blechen unter 1 mm Wandstärke, vorteilhaft.

Als besonders günstige Gaszusammensetzung hat sich darüber hinaus ein Außengas-Gemisch mit 91 bis 93 Vol-% Argon und 7 bis 9 Vol-% Sauerstoff ergeben. Glattheit und Regelmäßigkeit sowie Stabilität der Schweißnaht sind hierbei unter Einhaltung von ansonsten üblichen Schweißparametern in optimaler Weise erreicht.

Besonders vorteilhaft ist weiterhin die Durchführung der Schweißung derart, daß die zu verschweißenden Bleche oder deren umgebördelte Kanten ohne wesentliches Überstehen aufeinander zum Liegen gebracht werden und die Brennervorrichtung auf die Stirnseiten der Bleche hin ausgerichtet wird und dann so geführt wird, daß der Lichtbogenfußpunkt sich immer etwa auf der Berührungslinie oder dem eventuell vorhandenem Spalt zwischen den aufeinanderliegenden Blechkanten befindet.

Anhand der schematischen Zeichnung soll im folgenden das erfindungsgemäße Verfahren beispielhaft näher erläutert werden.

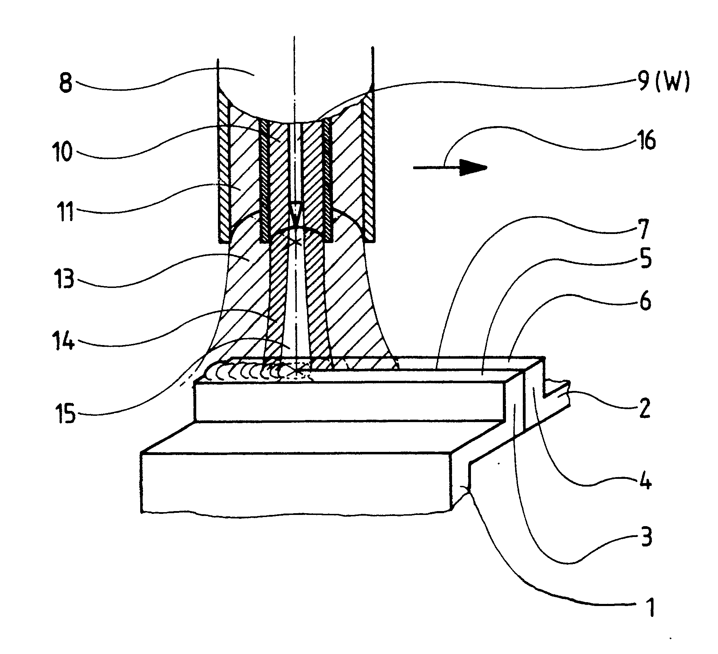

Die Figur zeigt schematisch eine Brennervorrichtung 8 mit zugehöriger Elektrode 9 und Zufuhrkanälen für das Zentrums-und Außengas 10, 11, sowie die zu verbindenden Dünnblechteile 1, 2 mit zugehörigen umgebördelten Kanten oder Flanschen 3, 4. Wie beim Widerstandspunktschweißen oder entsprechenden MAG-Schweißverfahren sind an der Verbindungsstelle der Blechteile 1, 2 umgebördelte Flansche 3, 4 vorgesehen, die zum verschweißen aufeinander zum Liegen gebracht werden. Im Gegensatz zu den vorbekannten Verfahren können die Flansche 3, 4 jedoch deutlich kürzer ausgelegt werden, da die Verschweißung der Bleche auch stirnseitig ausgeführt werden kann. Dazu wird die Brennervorrichtung 8 bezüglich ihrer Längsachse in etwa senkrechter Orientierung gegenüber der Ebene angeordnet, die von den Stirnflächen 5, 6 der aufeinanderliegenden Flansche festgelegt wird. Zum Schweißvorgang wird der Brenner 8 dann entlang der Schweißfuge, d.h. entlang der Berührungslinie 7 der beiden Flansche bzw. dem eventuell vorhandenem kleinen Spalt zwischen den beiden Flanschen, in geeignetem Abstand zum Werkstück geführt. Das bedeutet, daß der Fußpunkt des erzeugten Plasmalichtbogens immer auf der Berührungslinie oder dem Spalt zwischen den zu verbindenden Blechteilen zum liegen kommt.

In der Figur ist die Plasmabrenner-Vorrichtung im Halbschnitt dargestellt, so daß erkennbar ist, daß die Elektrode 9 konzentrisch von Gaszufuhrkanälen 10, 11 umgeben ist, von denen der innere Kanal 10 zur Zuführung des Argon-Zentrumsgases dient und der äußere Kanal 11 das Außengas liefert. Als Außengas wird ein Gasgemisch aus 92 Vol.% Ar und 8 Vol.% $O_2$ zugeführt, das etwa in dem mit der Kennziffer 13 bezeichneten Bereich strömt. Der Bereich des den Lichtbogen 15 etwas einschnürenden Zentrums- oder Plasmagases ist mit 14 gekennzeichnet. Der Brenner wird darüber hinaus in die mit dem Pfeil 16 bezeichnete Richtung vorwärtsbewegt und mit einem Grundstrom mit überlagerten Strompulsen betrieben, die mit einer Frequenz im Bereich von 3 bis 5 Hz zugeführt werden. Die Vorschubgeschwindigkeit liegt im Bereich von 45 bis 55 cm/min und der Brennerabstand vom Werkstück wird mit Vorteil auf einem Wert zwischen 5 und 10 mm gehalten.

Mit diesen Einstellwerten werden die bereits oben näher beschriebenen sehr guten Schweißergebnisse erzielt, wobei auch davon abweichende, im Rahmen vernünftiger Schweiß parameter sich bewegende Einstellungen, beispielsweise stechende oder schleppende Brennerführung, oder auch das Überstehen eines Flansches aufgrund unvermeidbarer Maßschwankungen der einzelnen Bauteile in aller Regel noch zu guten Ergebnissen führt. Neben verzinkten Dünnblechen können mit dem erfindungsgemäßen Verfahren auch mit anderen Materialien beschichtete Bleche, z.B. aluminierte Dünnbleche, vorteilhaft verschweißt werden.

## Ansprüche

1. Verfahren zum Verschweißen von beschichteten, insbesondere verzinkten, Dünnblechen, dadurch gekennzeichnet, daß die Verschweißung entlang der vorgesehenen Schweißfuge mit dem Plasma-Lichtbogen-Schweißverfahren durchgeführt wird, wobei neben Argon als Zentrumsgas ein Argon-Sauerstoff-Gemisch mit 87 bis 97 Vol% Argon und 3 bis 13 Vol% Sauerstoff als Außen-oder Schutzgas, eingesetzt wird.

2. Verfahren nach Anspruch 1, dadurch gekennzeichnet, daß das Plasma-Lichtbogen-Schweißen mit pulsförmigem Stromverlauf angewendet wird.

3. Verfahren nach Anspruch 1 oder 2, dadurch gekennzeichnet, daß ein Außengas-Gemisch mit 91 bis 93 Vol% Argon und 7 bis 9 Vol% Sauerstoff verwendet wird.

4. Verfahren nach einem der Ansprüche 1 bis 3, dadurch gekennzeichnet, daß die zu verschweißenden Bleche oder deren umgebördelte Kanten ohne wesentliches Überstehen aufeinander zum Liegen gebracht werden und die Brennervorrichtung auf die Stirnseiten der Bleche hin ausgerichtet wird und dann so geführt wird, daß der Lichtbogenfußpunkt sich immer etwa auf der Berührungslinie oder dem eventuell vorhandenen Spalt zwischen den aufeinanderliegenden Blechkanten befindet.

8

9 (W)

10

16

11

7

13

5

14

6

15

2

4

3

1

Europäisches
Patentamt

**EUROPÄISCHER
RECHERCHENBERICHT**

Nummer der Anmeldung

**EP 90 11 6895**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | US-A-4 058 698  (D.G. BYKHOVSKY et al.)<br>* Beispiel 3; Spalten 3,4 *<br>– – – | 1 | B 23 K 35/38<br>B 23 K 10/02 |
| Y | US-A-2 868 950  (R.M. GAGE)<br>* Beispiel 3 *<br>– – – | 1 | |
| A | GB-A-7 630 52  (BABCOCK & WILCOX)<br>– – – | | |
| A | US-A-4 119 828  (D.G. BYKHOVSKY et al.)<br>– – – | | |
| A | US-A-3 969 603  (P. BOUGHTON et al.)<br>– – – | | |
| A | IBM TECHNICAL DISCLOSURE BULLETIN, Band 11, Nr. 12, Mai 1969, Seite 1707, New York, US; R.A. GOODRICH: "Welding of electroless nickel-plated parts"<br>– – – – – | | |

| | RECHERCHIERTE SACHGEBIETE (Int. Cl.5) |
|---|---|
| | B 23 K |

Der vorliegende Recherchenbericht wurde für alle Patentansprüche erstellt

| Recherchenort | Abschlußdatum der Recherche | Prüfer |
|---|---|---|
| Den Haag | 13 Dezember 90 | MOLLET G.H.J. |